# EUROPEAN PATENT SPECIFICATION

(11) **EP 2 666 220 B1**
(45) Date of publication and mention of the grant of the patent: **18.09.2019**
(21) Application number: 12737154.0
(22) Date of filing: 20.01.2012
(51) Int. Cl.: H05B 33/08, H02M 1/42

(54) **DRIVING CIRCUITRY FOR LED LIGHTING WITH REDUCED TOTAL HARMONIC DISTORTION**
TREIBERSCHALTUNG FÜR EINE LED-BELEUCHTUNG MIT REDUZIERTER TOTALER HARMONISCHER VERZERRUNG
CIRCUITERIE D'ATTAQUE POUR ÉCLAIRAGE À DEL À DISTORSION HARMONIQUE TOTALE RÉDUITE

(30) Priority: 21.01.2011 US 201161435258 P
(43) Date of publication of application: 27.11.2013
(73) Proprietor: Signify North America Corporation, Somerset, NJ 08873 (US)
(72) Inventor: GRAJCAR, Zdenko, Crystal, Minnesota 55427 (US)
(74) Representative: Verweij, Petronella Daniëlle
(86) International application number: PCT/US2012/022059
(87) International publication number: WO 2012/100183

(56) References cited:
- JP-A- 2006 147 933
- JP-A- 2007 299 788
- US-A1- 2005 212 458
- US-A1- 2006 214 603
- US-A1- 2009 267 534
- US-A1- 2010 013 402
- US-A1- 2010 237 800
- US-B1- 7 081 722

## Description

### Cross-Reference to Related Application

The present application claims the benefit of priority from U.S. Provisional Patent Application Serial No. 61/423,258, entitled "CURRENT CONDITIONER WITH REDUCED TOTAL HARMONIC DISTORTION" and filed on January 21, 2011.

### Background

Lighting circuits that use light emitting diodes (LEDs) to produce illumination typically have higher energy efficiency and longer service life than equivalent incandescent bulbs, fluorescent lamps, or other lighting sources.

LEDs, however, conduct current in only one direction, and therefore use direct current (DC) to function. In order to function efficiently when powered by an alternating current (AC) power source, a LED-based lighting circuits includes a rectifier circuit to convert a sinusoidal AC input power signal into a half-wave or a full-wave rectified DC power signal. The rectified sinusoidal signal has a variable value that follows a sinusoidal envelope. Because LEDs (and LED lighting circuits) have a threshold voltage below which the LEDs are powered off and neither conduct current or emit light, a LED (or LED lighting circuit) powered by a rectified sinusoidal signal will in general repeatedly turn on and off depending on whether the instantaneous value of the rectified sinusoidal signal exceeds or not the threshold voltage of the LED.

JP 2006 147933 A discloses a light emitting diode illuminating device.

US 7 081 722 B1 discloses a light emitting diode multiphase driver circuit.

In order to make efficient use of the input power, LED lighting circuits can be designed such that different numbers of LEDs are powered at different times during each cycle. In general, the lighting circuit includes a voltage sensing circuit, for measuring the instantaneous value of the rectified sinusoidal signal, and a microprocessor for determining which LEDs should be powered based on the measured value of the rectified sinusoidal

signal. The microprocessor controls a set of digital switches for selectively activating various combinations of LEDs based on the microprocessor's control. For example, the microprocessor may activate a first set of LEDs at the beginning and end of a cycle, when the instantaneous value of the rectified sinusoidal signal is low, and the microprocessor may activate a series connection of two or more sets of LEDs in the middle of the cycle, when the instantaneous value of the rectified sinusoidal signal is high.

The activation and deactivation of the sets of LEDs by the digital switches, however, causes elevated levels of harmonic distortion in the LED lighting circuit and the power lines providing the AC driving signal. In addition, the driving of non-linear LED loads causes power factor distortion in the LED lighting circuit and the power lines providing the AC driving signal. The harmonic and power factor distortions both contribute to decreases in the total efficiency of the LED lighting, as the distortion causes harmonic currents to travel through the power lines providing the AC driving signal.

A need therefore exists for driving circuitry for LED lighting applications which produces minimal total harmonic distortion.

### Summary

According to a first aspect of the present invention, there is provided a circuit according to independent Claim 1.

According to a second aspect of the present invention there is provided a circuit according to independent Claim 8.

It is understood that various configurations of the subject technology will become readily apparent to those skilled in the art from the disclosure, wherein various configurations of the subject technology are shown and described by way of illustration. As will be realized, the subject technology is capable of other and different configurations and its several details are capable of modification in various other respects, all without departing from the scope of the subject technology. Accordingly, the summary, drawings and detailed description are to be regarded as illustrative in nature and not as restrictive.

### Brief Description of the Drawings

The drawing figures depict one or more implementations in accord with the present teachings, by way of example only, not by way of limitation. In the figures, like reference numerals refer to the same or similar elements.
FIG. 1A is a schematic diagram showing a conditioning circuit for driving two LED groups using a rectified AC input voltage.
FIGS. 1B, 1C, and ID respectively are a first voltage timing diagram, a current timing diagram, and a second voltage timing diagram illustratively showing the operation of the conditioning circuit of FIG. 1A.
FIGS. 2A, 2B, 2C, and 2D are schematic diagrams showing various examples of interconnections of LEDs and of LED groups for use in the conditioning circuit of FIG. 1A.
FIG. 3A is a schematic diagram showing a modified conditioning circuit for driving two LED groups using a rectified AC input voltage.
FIG. 3B is a current timing diagram illustratively showing the operation of the conditioning circuit of FIG. 3A.
FIG. 4A is a schematic diagram showing a modified conditioning circuit for driving three LED groups using a rectified AC input voltage.
FIG. 4B is a current timing diagram illustratively showing the operation of the conditioning circuit of FIG. 4A.
FIG. 5A is a schematic diagram showing a modified conditioning circuit for driving two LED groups using a rectified AC input voltage.
FIGS. 5B and 5C are a current timing diagram and a lighting intensity diagram illustratively showing the operation of the conditioning circuit of FIG. 5A.

### Detailed Description of Preferred Embodiments

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

Driving circuitry for powering light emitting diode (LED) lights generally rely on digital circuitry to measure the instantaneous value of a driving voltage, on a microprocessor to identify LEDs to activate based on the measured value, and on digital switches to selectively activate the identified LEDs. The digital circuitry, however, reduces the overall efficiency of the LED lighting by causing harmonic distortion and power factor distortion in the LED light and the associated power line. In order to reduce the harmonic distortion and power factor distortion caused by the digital circuitry, a current conditioning circuit is presented for selectively routing current to various LED groups in a LED light. The current conditioning circuit uses analog components and circuitry for operation, and produces minimal harmonic distortion and power factor distortion.

The current conditioning circuitry is provided to selectively route current to different LED groups depending on the instantaneous value of an AC input voltage. In a preferred embodiment, the conditioning circuitry includes only analog circuit components and does not include digital components or digital switches for operation.

The circuitry relies on depletion-mode metal-oxide-semiconductor field-effect transistor (MOSFET) transistors for operation. In a preferred embodiment, the depletion MOSFET transistors have a high resistance between their drain and source terminals, and switch between conducting and non-conducting states relatively slowly. The depletion-mode MOSFET transistors may conduct current between their drain and source terminals when a voltage V_{GS} between the gate and source terminals is zero or positive and the MOSFET transistor is operating in the saturation (or active, or conducting) mode (or region, or state). The current through the depletion-mode MOSFET transistor, however, may be restricted if a negative V_{GS} voltage is applied to the terminals and the MOSFET transistor enters the cutoff (or non-conducting) mode (or region, or state). The MOSFET transistor transitions between the saturation and cutoff modes by operating in the linear or ohmic mode or region, in which the amount of current flowing through the transistor (between the drain and source terminals) is dependent on the voltage between the gate and source terminals V_{GS}. In one example, the depletion MOSFET transistors preferably have an elevated resistance between drain and source (when operating in the linear mode) such that the transistors switch between the saturation and cutoff modes relatively slowly. The depletion MOSFET transistors switch between the saturation and cutoff modes by operating in the linear or ohmic region, thereby providing a smooth and gradual transition between the saturation and cutoff modes. In one example, a depletion-mode MOSFET transistor may have a threshold voltage of -2.6 volts, such that the depletion-mode MOSFET transistor allows substantially no current to pass between the drain and source terminals when the gate-source voltage V_{GS} is below -2.6 volts. Other values of threshold voltages may alternatively be used.

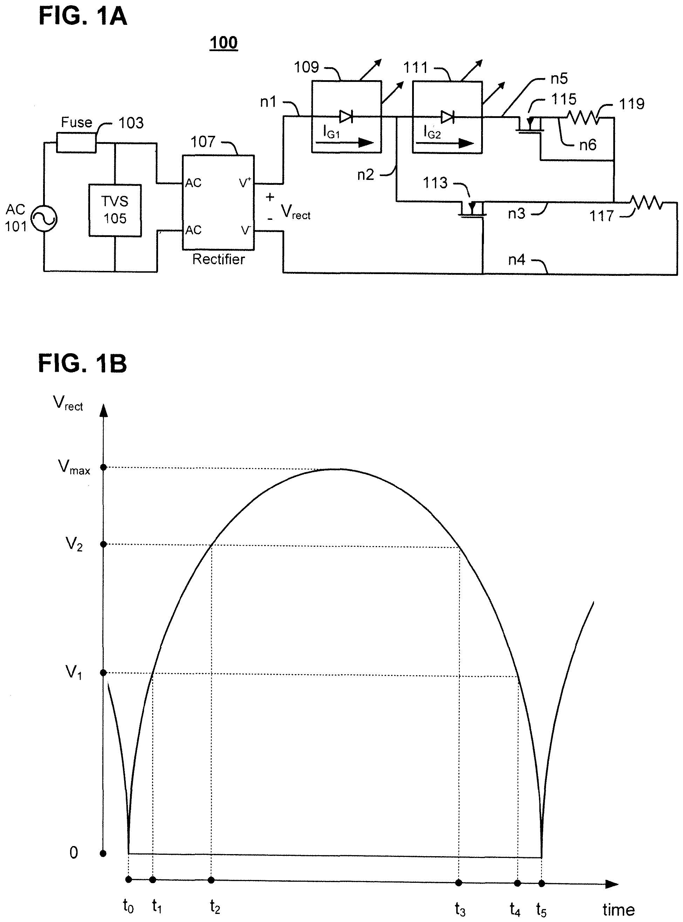

FIG. 1A is a schematic diagram showing a conditioning circuit 100 for driving two LED groups using a rectified AC input voltage. The conditioning circuit 100 uses analog circuitry to selectively route current to one or both of the LED groups based on the instantaneous value of the AC input voltage.

The conditioning circuit 100 receives an AC input voltage from an AC voltage source 101, such as a power supply, an AC line voltage, or the like. The AC voltage source 101 is coupled in series with a fuse 103, and the series interconnection of the AC voltage source 101 and the fuse 103 is coupled in parallel with a transient voltage suppressor (TVS) 105 or other surge protection circuitry. The series interconnection of the AC voltage source 101 and the fuse 103 is further coupled in parallel with two input terminals of a voltage rectifier 107. In one example, the voltage rectifier 107 can include a diode bridge rectifier that provides full-wave rectification of an input sinusoidal AC voltage waveform. In other examples, other types of voltage rectification circuitry can be used.

Voltage rectifier 107 functions as a source of variable DC voltage, and produces a rectified voltage V_{rect} between its two output terminals V⁺ and V⁻. The rectified voltage V_{rect} corresponds to a rectified version of the AC driving voltage. In general, the rectified voltage V_{rect} is a full-wave rectified DC voltage. The rectified voltage V_{rect} is used as the input DC voltage for driving the LED groups 109 and 111 of the conditioning circuit 100. In particular, the rectified voltage V_{rect} is used as an input voltage for driving two series interconnections of an LED group, a transistor, and a resistor.

A first series interconnection of a first LED group 109, a first n-channel depletion MOSFET transistor 113 (coupled by the drain and source terminals), and a first resistor 117 is coupled between the output terminals V⁺ and V⁻ of the voltage rectifier 107. The first LED group 109 has its anode coupled to the terminal V⁺ (node n1), and its cathode coupled to the drain terminal of first depletion MOSFET transistor 113 (node n2). The source terminal of transistor 113 is coupled to a first terminal of resistor 117 (node n3), while both the gate terminal of transistor 113 and the second terminal of resistor 117 are coupled to the terminal V⁻ (node n4) of the voltage rectifier 107, such that the voltage across the first resistor 117 serves as the biasing voltage V_{GS} between the gate and source terminals of the first transistor 113.

A second series interconnection of a second LED group 111, a second n-channel depletion MOSFET transistor 115 (coupled by the drain and source terminals), and a second resistor 119 is coupled between the drain and source terminals of the first transistor 113. In particular, the anode of second LED group 111 is coupled to node n2, while the cathode of the second LED group 111 is coupled at node n5 to the drain terminal of the second transistor 115. The source terminal of the second transistor 115 is coupled to a first terminal of the second resistor 119 at node n6, while both the gate terminal of the second transistor 115 and the second terminal of the second resistor 119 are coupled to node n3 and the source terminal of the first transistor 113. The voltage across the second resistor 119 thereby serves as the biasing voltage V_{GS} between the gate and source terminals of the second transistor 115.

Each of the first and second LED groups 109 and 111 has a forward voltage (or threshold voltage). The forward voltage generally is a minimum voltage required across the LED group in order for current to flow through the LED group, and/or for light to be emitted by the LED group. The first and second LED groups 109 and 111 may have the same forward voltage (e.g., 50 volts), or the first and second LED groups 109 and 111 may have different forward voltages (e.g., 60 volts and 40 volts, respectively).

In operation, in the driving circuitry 100 of FIG. 1A, one or both of the LED groups 109 and 111 may conduct current depending on whether the forward voltage of one or both of the LED groups 109 and 111 is satisfied. The operation of the LED driving circuitry 100 of FIG. 1A will be explained with reference to the voltage timing diagram of FIG. 1B.

FIG. 1B is a voltage timing diagram showing the rectified voltage V_{rect} during one cycle. The rectified voltage V_{rect} may be applied at the output of voltage rectifier 107 to the LED groups 109 and 111, as shown in driving circuitry 100 of FIG. 1A.

The exemplary cycle of the rectified voltage V_{rect} shown in FIG. 1B begins at time t₀ with the rectified voltage V_{rect} having a value of 0V (0 volts). The rectified voltage V_{rect} undergoes a half-sine cycle between times t₀ and t₅. Between times t₀ and t₁, the value of the rectified voltage V_{rect} remains below the forward voltage of the first LED group 109, and no current flows through the first LED group 109. As the rectified voltage V_{rect} reaches a value of V₁, the forward voltage of the first LED group 109 is reached and current gradually begins to flow through the first LED group 109. At this time, the first depletion MOSFET transistor 113 is in a conducting state such that the current flowing from the rectifier 107 through the first LED group 109 flows through the MOSFET transistor 113 (from drain to source terminals) and the first resistor 117.

As the rectified voltage V_{rect} increases in value from V₁ to V₂, the value of the current flowing through the first LED group 109, the first depletion MOSFET transistor 113, and the first resistor 117 increases. The increase in current through the first resistor 117 causes the voltage across the first resistor 117 to increase, and the corresponding reverse voltage between the gate and source terminals of the first depletion MOSFET transistor 113 to increase. As the reverse gate-source voltage increases, however, the first depletion MOSFET transistor 113 begins to transition out of saturation and into the "linear" or "ohmic" mode or region of operation. The first depletion MOSFET transistor 113 may thus begin to shut down and to conduct less current as the value of the rectified voltage V_{rect} reaches the value V₂.

Meanwhile, as the rectified voltage V_{rect} reaches the value V₂ (at time t₂), the rectified voltage V_{rect} is reaching or exceeding the sum of the forward voltage of the first and second LED groups 109 and 111. As a result, the second LED group 111 begins to conduct current, and the current flowing through the first LED group 109 begins to flow through the series interconnection of the second LED group 111, the second depletion MOSFET transistor 115, and the second and first resistors 119 and 117. As V_{rect} exceeds V₂ and the first depletion MOSFET transistor 109 enters the cutoff mode, most or all of the current flowing through the first LED group 109 flows through the second LED group 111.

Thus, during the first half of the cycle, no current initially flows through either of the first and second LED groups 109 and 111 (period [t₀, t₁]). However, as the value of V_{rect} reaches or exceeds V₁, current begins to flow through the first LED group 109 which starts to emit light (period [t₁, t₂]) while the second LED group 111 remains off. Finally, as the value of V_{rect} reaches or exceeds V₂, current begins to flow through both the first and second LED groups 109 and 111 which both emit light (period after t₂).

During the second half of the cycle, the rectified voltage V_{rect} decreases from a maximum of Vₘₐₓ back to 0 volts. During this period, the second and first LED groups 111 and 109 are sequentially turned off and gradually stop conducting current. In particular, while the value of V_{rect} remains above V₂, both the first and second LED groups 109 and 111 remain in the conducting state. However, as the value of V_{rect} reaches or dips below V₂ (at time t₃), V_{rect} no longer reaches or exceeds the sum of the forward voltage of the first and second LED groups 109 and 111, and the second LED group 111 begins to turn off and to stop conducting current. At around the same time, the voltage drop across the first resistor drops below the threshold voltage of the first depletion MOSFET transistor 109, and the first depletion MOSFET transistor 109 enter the linear or ohmic operation mode and begins to conduct current once again. As a result, current flows through the first LED group 109, the first depletion MOSFET transistor 109, and the first resistor 117, and the first LED group 109 thus continues to emit light. As the value of V_{rect} reaches or dips below V₁ (at time t₄), however, V_{rect} no longer reaches or exceeds the forward voltage of the first LED group 109, and the first LED group 109 begins to turn off and stop conducting current. As a result, both the first and second LED groups 109 and 111 turn off and stop emitting light during the period [t₄, t₅].

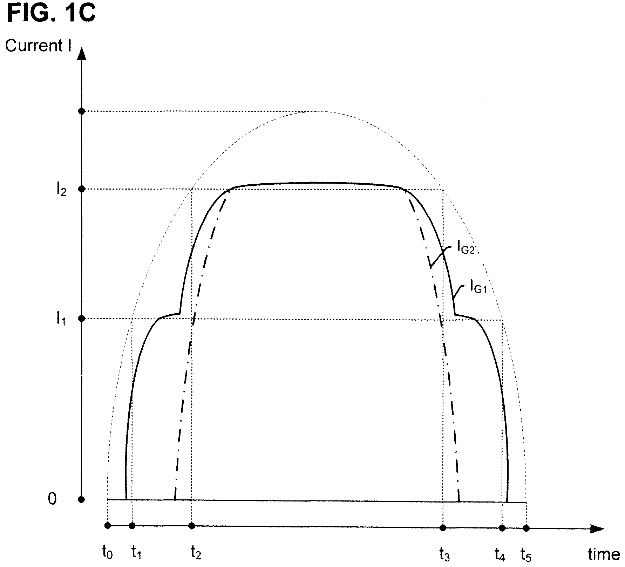

FIG. 1C is a current timing diagram showing the currents I_{G1} and I_{G2} respectively flowing through the first and second LED groups 109 and 111 during one cycle of the rectified voltage V_{rect}.

As described in relation to FIG. 1B, the current I_{G1} through the first LED group 109 begins flowing around time t₁, and increases to a first value I₁. The current I_{G1} continues to flow through the first LED group 109 from around time t₁ to around time t₄. Between times t₂ and t₃, the current I_{G2} flows through the second LED group 111, and reaches a second value I₂. During the time period [t₂, t₃], the current I_{G1} increases to the value I₂.

In general, electrical parameters of the components of driving circuit 100 can be selected to adjust the functioning of the circuit 100. For example, the forward voltages of the first and second LED groups 109 and 111 may determine the value of the voltages V₁ and V₂ at which the first and second LED groups are activated. In particular, the voltage V₁ may be substantially equal to the forward voltage of the first LED group, while the voltage V₂ may be substantially equal to the sum of the forward voltages of the first and second LED groups. In one example, the forward voltage of the first LED group may be set to a value of 60V, for example, while the forward voltage of the second LED group may be set to a value of 40V, such that the voltage V₁ is approximately equal to 60V and the voltage V₂ is approximately equal to 100V. In addition, the value of the first resistor 117 may be set such that the first depletion MOSFET transistor 113 enters a non-conducting state when the voltage V_{rect} reaches a value of V₂. As such the value of the first resistor 117 may be set based on the threshold voltage of the first depletion MOSFET transistor 113, the drain-source resistance of the first depletion MOSFET transistor, and the voltages V₁ and V₂. In one example, the first resistor may have a value of around 31.6 ohms.

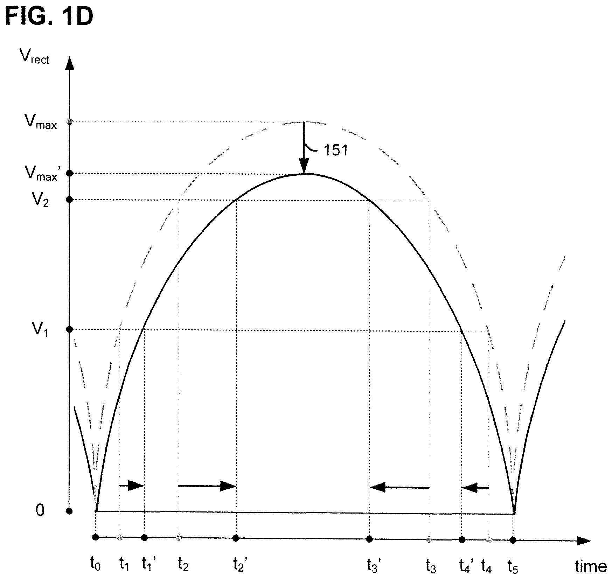

The conditioning circuitry 100 of FIG. 1A can be used to provide dimmable lighting using the first and second LED groups 109 and 111. The conditioning circuitry can, in particular, provide a variable lighting intensity based on the amplitude of the rectified driving voltage V_{rect}. FIG. 1D is a voltage timing diagram showing the effects of a reduced driving voltage amplitude on the LED lighting circuitry 100.

As shown in FIG. ID, the amplitude of the driving voltage V_{rect} has been reduced from a value of Vₘₐₓ to a value of Vₘₐₓ' at 151. The amplitude of the driving voltage V_{rect} may have been reduced through the activation of a potentiometer, a dimmer switch, or other appropriate means. While the amplitude of the driving voltage is reduced, the threshold voltages V₁ and V₂ remain constant as the threshold voltages are set by parameters of the components of the circuit 100.

Because the driving voltage V_{rect} has a lower amplitude, the driving voltage takes a time [t₀, t₁'] to reach the first threshold voltage V₁ during the first half of each cycle that is longer than the time [t₀, t₁]. Similarly, the driving voltage takes a time [t₀, t₂'] to reach the second threshold voltage V₂ that is longer than the time [t₀, t₂]. Additionally, the lower-amplitude driving voltage reaches the second threshold sooner (at a time t₃', which occurs sooner than the time t₃) during the second half of each cycle, and similarly reaches the first threshold sooner (at a time t₄', which occurs sooner than the time t₄), during the second half of each cycle. As a result, the time-period [t₁', t₄'] during which current flows through the first LED group 109 is substantially reduced with respect to the corresponding time-period [t₁, t₄] when the input voltage has full amplitude. Similarly, the time-period [t₂', t₃'] during which current flows through the second LED group 111 is substantially reduced with respect to the corresponding time-period [t₂, t₃] when the input voltage has full amplitude. Because the lighting intensity produced by each of the first and second LED groups 109 and 111 is dependent on the total amount of current flowing through the LED groups, the shortening of the time-periods during which current flows through each of the LED groups causes the lighting intensity produced by each of the LED groups to be reduced.

In addition to providing dimmable lighting, the conditioning circuitry 100 of FIG. 1A can be used to provide color-dependent dimmable lighting. In order to provide color-dependent dimmable lighting, the first and second LED groups may include LEDs of different colors, or different combinations of LEDs having different colors. When a full amplitude voltage V_{rect} is provided, the light output of the conditioning circuitry 100 is provided by both the first and second LED groups, and the color of the light output is determined based on the relative light intensity and the respective color light provided by each of the LED groups. As the amplitude of the voltage V_{rect} is reduced, however, the light intensity provided by the second LED group will be reduced more rapidly than the light intensity provided by the first LED group. As a result, the light output of the conditioning circuitry 100 will gradually be dominated by the light output (and the color of light) produced by the first LED group.

The conditioning circuitry 100 shown in FIG. 1A includes first and second LED groups 109 and 111. Each LED group can be formed of one or more LEDs, or of one or more high-voltage LEDs. In examples in which a LED group includes two or more LEDs (or two or more high-voltage LEDs), the LEDs may be coupled in series and/or in parallel.

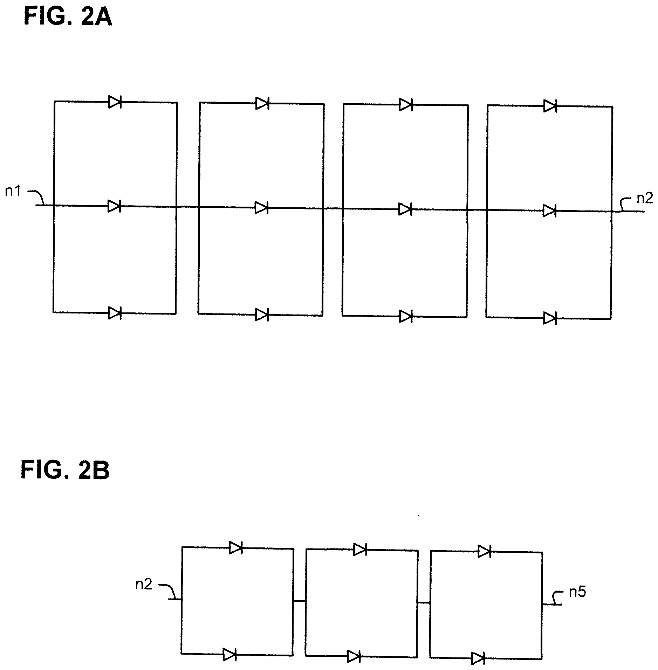

FIGS. 2A and 2B show examples of interconnections of LEDs that may be used as LED groups 109 and 111. In the example of FIG. 2A, an exemplary LED group (coupled between nodes n1 and n2, such as LED group 109 of FIG. 1A) is formed of four sub-groups of LEDs coupled in series, where each sub-group is a parallel interconnection of three LEDs. In the example of FIG. 2B, an exemplary LED group (coupled between nodes n2 and n5, such as LED group 111 of FIG. 1A) is formed of three sub-groups of LEDs coupled in series, where each sub-group is a parallel interconnection of two LEDs.

Various other interconnections of LEDs may be used. In another example, a first LED group may be formed of 22 sub-groups of LEDs coupled in series where each sub-group is a parallel interconnection of three LEDs, while a second LED group may be formed of 25 sub-groups of LEDs coupled in series where each sub-group is a parallel interconnection of two LEDs. The LEDs in a single group may be wire bonded to a single semiconductor die, or to multiple interconnected semiconductor dies.

In general, the structure of a LED group can be selected so as to provide the LED group with particular electrical parameters. For example, the threshold voltage of the LED group can be increased by coupling more LED sub-groups in series, while the maximum power (or maximum current) rating of the LED group can be increased by coupling more LEDs in parallel within each sub-group. As such, a LED group can be designed to have particular electric parameters, such as having a threshold voltage of 40 V, 50 V, 60 V, 70 V, 120 V, or other appropriate voltage level. Similarly, a LED group can be designed to have a particular power rating, such as a power rating of 2, 7, 12.5, or 16 watts.

Each LED group may further be formed of LEDs emitting light of the same or of different colors. For example, a LED group only including LEDs emitting a red light may emit a substantially red light, while a LED group including a mixture of LEDs emitting red light and white light may emit a reddish light.

As shown in the exemplary current timing of FIG. 1C, the maximum amplitude of the currents I_{G1} and I_{G2} through the first and second LED groups 109 and 111 is approximately the same. However, because the first LED group 109 conducts current for a longer period of time, the total power output by the first LED group 109 is generally higher than the total power output by the second LED group 111. In order to avoid over-driving the first LED group 109, the first and second LED groups 109 and 111 can include different interconnections of LEDs, as described in relation to FIGS. 2A and 2B above. In one example, the first LED group 109 may include more LEDs coupled in parallel than the second LED group 111, so as to reduce the maximum amplitude of current flowing through each LED of the first LED group 109 and thereby reduce the chances of over-driving the first LED group 109.

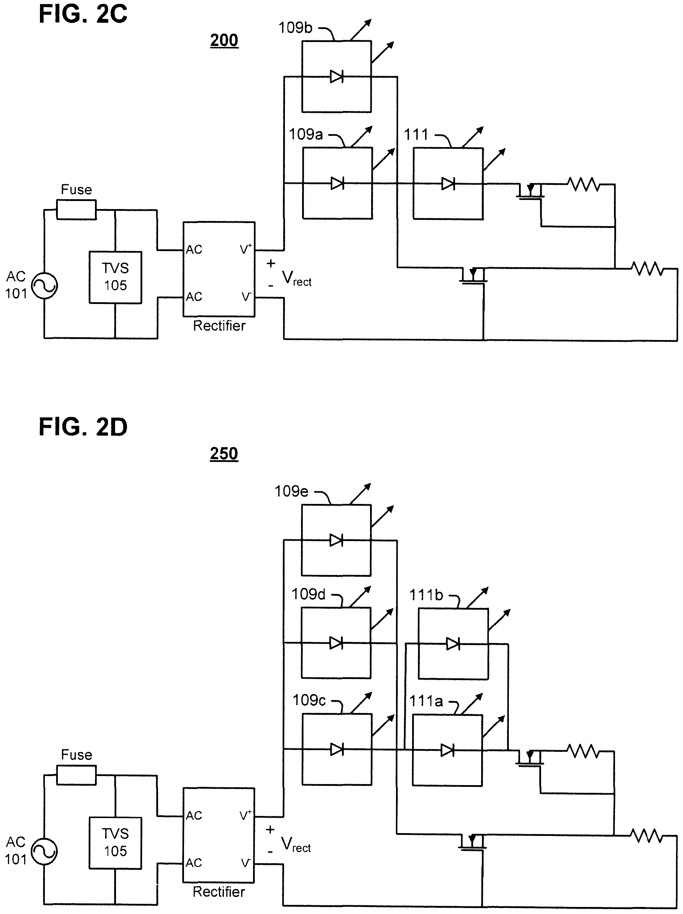

Alternatively, different numbers of LED groups may be used in the conditioning circuitry 100. FIGS. 2C and 2D show two examples in which conditioning circuitry 100 has been modified to include various numbers of LED groups.

For example, FIG. 2C shows conditioning circuitry 200 which is substantially similar to the conditioning circuitry 100. However, in the conditioning circuitry 200 of FIG. 2C, the first LED lighting group has been replaced by a parallel interconnection of two LED groups 109a and 109b. By providing two LED groups 109a and 109b coupled in parallel, one-half of the current I_{G1} will flow through each of the LED groups 109a and 109b. The parallel interconnection of the two LED groups 109a and 109b can thus reduce the total current flowing through each LED group, and reduce the total power output by each LED group. The parallel interconnection may thus minimize the chances that either of the LED groups 109a and 109b will suffer from over-driving.

FIG. 2D shows another exemplary conditioning circuit 250 which is substantially similar to conditioning circuit 100. However, in conditioning circuit 250, the first LED lighting group has been replaced by a parallel interconnection of three LED groups 109c, 109d, and 109e. Additionally, the second LED lighting group 111 has been replaced by a parallel interconnection of two LED groups 111a and 111b. As described in relation to FIG. 2C, the parallel interconnection of two or more LED groups in parallel may reduce the total current flowing through each LED group, and reduce the chances that any LED group will suffer from over-driving.

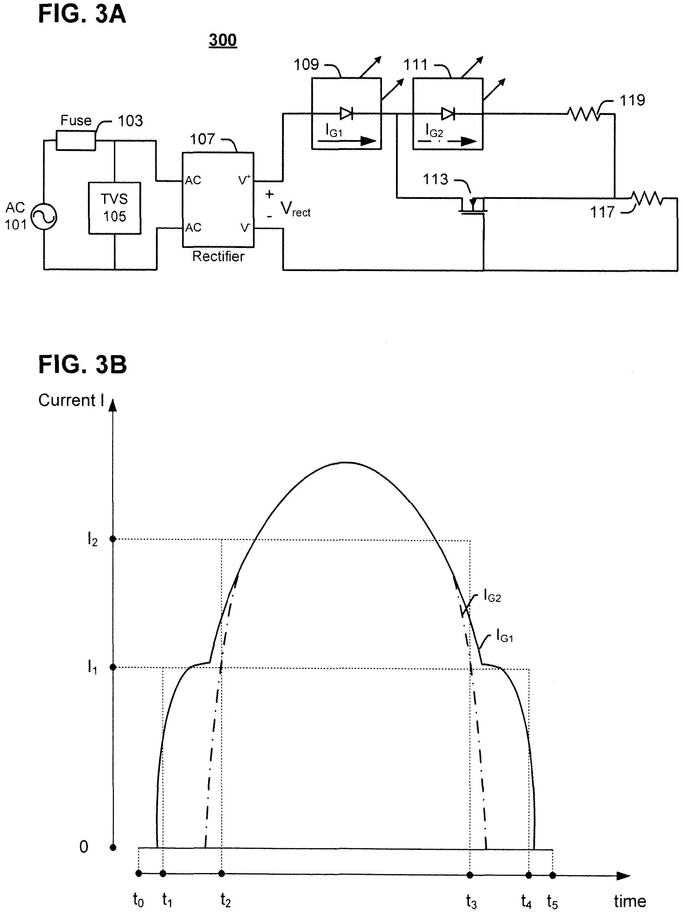

FIG. 3A shows a schematic diagram of a modified conditioning circuit 300 for driving two LED groups using a rectified AC input voltage. The modified conditioning circuit 300 is substantially similar to the conditioning circuit 100 of FIG. 1A. However, modified circuit 300 does not include the second depletion MOSFET transistor 115 of circuit 100. Instead, the cathode of the second LED group 111 is coupled directly to the second resistor 119.

The circuit 300 functions substantially similarly to circuit 100. As described in relation to FIGS. 1B and 1C, the first LED group 109 of circuit 300 will conduct current during a first time-period [t₁, t₄], while the second LED group 111 of circuit 300 will conduct current during second time-period [t₂, t₃]. However, because the circuit 300 does not include the depletion MOSFET transistor 115, the peak current flowing through the first and second LED groups during the time-period [t2, t₃] is not limited by the conductance of the depletion MOSFET transistor 115. As a result, the current flowing through the first and second LED groups in circuit 300 may peak with a higher value than in the circuit 100. The circuit 300 may, however, have lower lighting efficiency than the circuit 100 because more power is dissipated by the second resistor 119.

FIG. 3B is a current timing showing the currents I_{G1} and I_{G2} respectively flowing through the first and second LED groups 109 and 111 of circuit 300 during one cycle. As shown in FIG. 3B, the current flows through circuit 300 are generally similar to the current flows through circuit 100 and shown in FIG. 1C. However, the peak amplitudes reached by the currents I_{G1} and I_{G2} in circuit 300 (as shown in FIG. 3B) are higher than the peak amplitudes reached in circuit 100 (as shown in FIG. 1C).

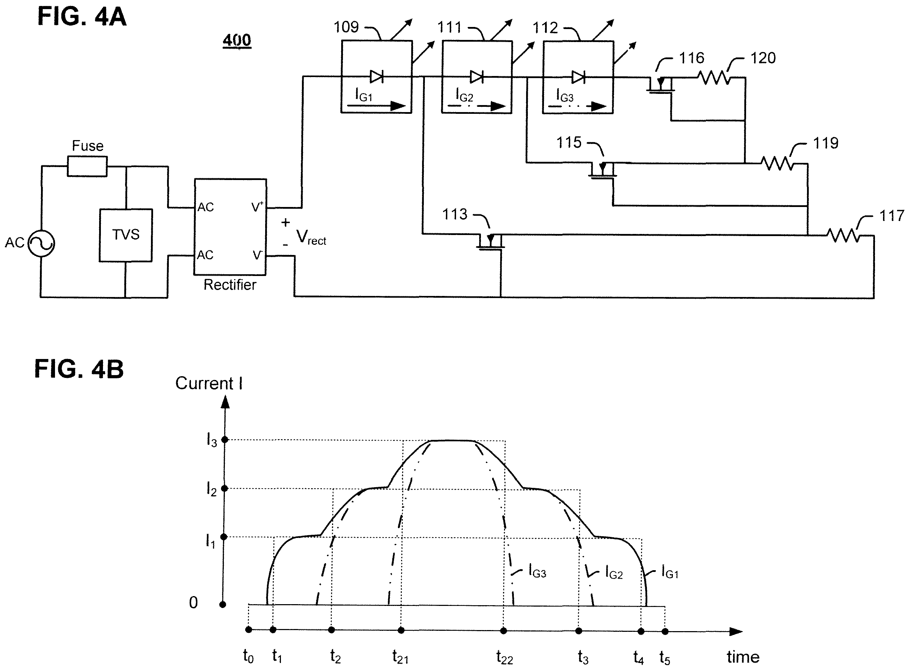

FIG. 4A shows a schematic diagram of a modified circuit 400 for driving three LED groups using a rectified AC input voltage. The modified circuit 400 is substantially similar to the conditioning circuit 100 of FIG. 1A. However, modified circuit 400 includes a series interconnection of a third LED group 112, a third depletion MOSFET transistor 116, and a third resistor 120 coupled between the cathode of the second LED group 111 and the source of the second depletion MOSFET transistor 115.

The modified circuit 400 functions similarly to LED lighting circuit 100. However, the modified circuit 400 selectively routes current to zero, one, two, or all three of the LED groups depending on the instantaneous value of the rectified driving voltage V_{rect}. The modified circuit 400 may have three voltage thresholds V₁, V₂, and V₃ at which different LED groups are activated. In particular, the first LED group 109 may be activated for a period [t₁, t₄] during which the driving voltage V_{rect} exceeds the first voltage threshold V₁, the second LED group 111 may be activated for a period [t₂, t₃] during which the driving voltage V_{rect} exceeds the second voltage threshold V₂, and the third LED group 112 may be activated for a period [t₂₁, t₂₂] during which the driving voltage V_{rect} exceeds the third voltage threshold V₃. The voltage thresholds may be such that V₁ < V₂ < V₃, and the time-periods may be such that [t₂₁, t₂₂] forms part of [t₂, t₃], and such that [t₂, t₃] forms part of [t₁, t₄].

FIG. 4B is a current timing diagram showing the currents I_{G1}, I_{G2}, and I_{G3} respectively flowing through the first, second, and third LED groups 109, 111, and 112 during one cycle of operation of the circuit 400. As shown in FIG. 4B, the first and second LED groups function substantially similarly to those shown in FIG. 1C. In particular, according to the timing diagram of FIG. 4B, a current I_{G1} flows through the first LED group 109 during the period [t₁, t₄], while a current I_{G2} flows through the second LED group 111 during the period [t₂, t₃]. However, in the circuit 400, the current I_{G3} additionally flows through the third LED group 112 during the period [t₂₁, t₂₂].

In circuit 400, electrical parameters of the components can be selected to adjust the functioning of the circuit 100. For example, the voltage V₁ may be substantially equal to the forward voltage of the first LED group, while the voltage V₂ may be substantially equal to the sum of the forward voltages of the first and second LED groups and the voltage V₃ may be substantially equal to the sum of the forward voltages of the first, second, and third LED groups. In one example, the forward voltage of the first LED group may be set to a value of 40V, for example, while the forward voltages of the second and third LED group may be set to values of 30V each, such that the voltages V₁, V₂, and V₃ are respectively approximately equal to 40V, 70V, and 100V. In addition, the value of the first resistor 117 may be set such that the first depletion MOSFET transistor 113 enters a non-conducting state when the voltage V_{rect} reaches a value of V₂, and the value of the second resistor 119 may be set such that the second depletion MOSFET transistor 115 enters a non-conducting state when the voltage V_{rect} reaches a value of V₃.

While LED lighting circuits have been presented that selectively drive two LED groups 109 and 111 (see FIG. 1A, circuit 100) and that selectively drive three LED groups 109, 111, and 112 (see FIG. 4A, circuit 400), the teachings contained herein can more generally be used to design circuits that drive four or more LED groups. For example, a circuit driving four LED groups may be substantially similar to circuit 400, but may include an additional series interconnection of a fourth LED group, a fourth depletion MOSFET transistor, and a fourth resistor coupled between the cathode of the third LED group 112 and the source of the third depletion MOSFET transistor 116. Similarly, a circuit driving five LED groups may be substantially similar to the circuit driving four LED groups, but may include an additional interconnection of a fifth LED group, a fifth depletion MOSFET transistor, and a fifth resistor coupled between the cathode of the fourth LED group and the source of the fourth depletion MOSFET transistor.

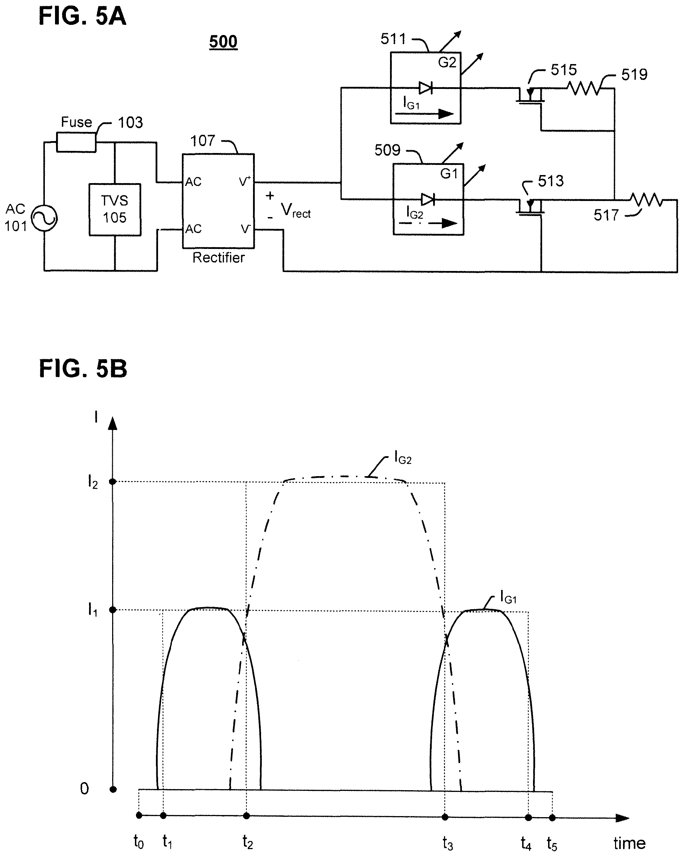

FIG. 5A shows a schematic diagram of a modified circuit 500 for driving two LED groups using a rectified AC input voltage. The modified circuit 500 is similar to the conditioning circuit 100 of FIG. 1A. However, in modified circuit 500, the first and second LED groups 509 and 511 are coupled in parallel and may therefore be substantially alternately provided with a driving current (instead of being substantially concurrently provided with a driving current, as in circuit 100).

In particular, in circuit 500, the first series interconnection of the first LED group 509, the first depletion MOSFET transistor 513 (coupled by the drain and source terminals), and the first resistor 517 is coupled between the output nodes V⁺ and V⁻ of the voltage rectifier 107. The gate terminal of the first depletion MOSFET transistor 513 is coupled to the node V⁻. However, the second series interconnection of the second LED group 511, the second depletion MOSFET transistor 515 (coupled by the drain and source terminals), and the second first resistor 519 is coupled between the output node V⁺ of the voltage rectifier 107 and the source terminal of the first depletion MOSFET transistor 513. The gate terminal of the second depletion MOSFET transistor 515 is coupled to the source terminal of the first depletion MOSFET transistor 513.

The functioning of the circuit 500 will be explained with reference to the current timing diagram of FIG. 5B. As in the case of conditioning circuit 100, conditioning circuit 500 has first and second voltage thresholds V₁ and V₂, and the rectified driving voltage V_{rect} respectively exceeds the first and second thresholds during time-periods [t₁, t₄] and [t₂, t₃] of each cycle.

Because the first and second LED groups 509 and 511 are not coupled in series, however, the current I_{G1} flowing through the first LED group 509 does not flow through the second LED group 511, and the current I_{G2} flowing through the second LED group 511 does not flow through the first LED group 509. As a result, as the first MOSFET depletion transistor 513 enters and operates in a non-conducting state (period [t₂, t₃]), the current I_{G1} through the first LED group 509 is reduced or cut-off. As a result, the first LED group 509 turns substantially off (and stops emitting light) during the period [t₂, t₃]. Meanwhile, the second LED group 511 of circuit 500 functions substantially as in circuit 100. In particular, the second LED group 511 conducts current (and emits light) during the period [t₂, t₃].

Electrical parameters for circuit 500 can be selected to adjust the functioning of the circuit. For example, the forward voltages of the first and second LED groups 509 and 511 may determine the value of the voltages V₁ and V₂ at which the first and second LED groups are activated. In particular, the voltage V₁ may be substantially equal to the forward voltage of the first LED group, while the voltage V₂ may be substantially equal to the forward voltage of the second LED group. In one example, the forward voltage of the first LED group may be set to a value of 60V, for example, while the forward voltage of the second LED group may be set to a value of 100V, such that the voltage V₁ is approximately equal to 60V and the voltage V₂ is approximately equal to 100V. In addition, the value of the first resistor 117 may be set such that the first depletion MOSFET transistor 113 enters a non-conducting state when the voltage V_{rect} reaches a value of V₂. As such the value of the first resistor 117 may be set based on the threshold voltage of the first depletion MOSFET transistor 513, the drain-source resistance of the first depletion MOSFET transistor 513, and the voltages V₁ and V₂.

The functioning of LED lighting circuit 500 may present an advantage in terms of providing a constant lighting intensity even in situations in which a driving voltage amplitude is variable. As described in relation to FIG. 1D, as the amplitude of the rectified voltage V_{rect} decreases, the length of the periods [t₁, t₄] and [t₂, t₃] during which the first and second LED groups emit light correspondingly decreases. As a result, the total lighting intensity produced by the LED groups is reduced. The LED lighting circuit 500, however, may provide a relatively constant lighting intensity even as the amplitude of the rectified voltage V_{rect} undergoes small variations.

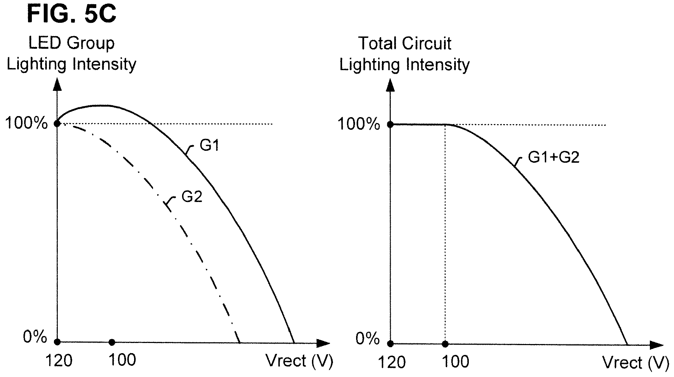

FIG. 5C shows a first diagram showing the relative lighting intensity of the first and second LED groups G1 and G2 according to the amplitude of the driving voltage V_{rect}. The lighting intensity is normalized, for each LED group, to a value of 100% for a driving voltage amplitude of 120V. As the amplitude of the driving voltage decreases below 120V, the lighting intensity of the second LED group G2 gradually decreases below 100%. However, as the amplitude of the driving voltage decreases below 120V, the lighting intensity of the first LED group G1 initially increases before decreasing for low driving voltage amplitudes. As a result, the total lighting intensity produced by the LED circuitry (i.e., the total lighting intensity provided by the combination of the first and second LED groups G1 + G2) remains relatively constant for a range of amplitudes of input voltage (e.g., the range of amplitudes [120V, 100V], in the example of FIG. 5C), before decreasing for low driving voltage amplitudes. The LED lighting circuitry 500 may therefore advantageously be used to provide a constant lighting intensity in the face of a variable power supply amplitude, while nonetheless enabling the lighting intensity to be dimmed at lower power supply amplitudes. For example, the LED lighting circuit 500 can provide a constant lighting intensity even when variations in supply amplitude caused by transients on a power line occur.

The various modifications to the conditioning circuit 100 described herein can be applied to the conditioning circuit 500. For example, the conditioning circuit 500 can include various interconnections of LEDs and of LED groups, such as the serial and parallel interconnections of LEDs and of LED groups described herein in relation to FIGS. 2A-2D. In another example, the second transistor 515 may optionally be removed from the conditioning circuit 500, and the cathode of the second LED group 511 coupled to the first terminal of the resistor 519. In yet another example, additional series interconnections of an LED group, a depletion MOSFET transistor, and a resistor may be included in the conditioning circuit 500. For instance, a third series interconnection of a third LED group, a third depletion MOSFET transistor, and a third resistor can be coupled between the anode of the first LED group 509 and the source of the second depletion MOSFET transistor 515. The gate terminal of the third depletion MOSFET transistor would then be coupled to the source of the second depletion MOSFET transistor 515. Similarly, a fourth series interconnection of a fourth LED group, a fourth depletion MOSFET transistor, and a fourth resistor can be coupled between the anode of the first LED group 509 and the source of the third depletion MOSFET transistor. The gate terminal of the fourth depletion MOSFET transistor would then be coupled to the source of the third depletion MOSFET transistor.

The conditioning circuits shown and described in this application, including the conditioning circuit 100, 200, 250, 300, 400, and 500 shown in the figures, and the various modifications to conditioning circuits described in the application, are configured to drive LED lighting circuits with reduced or minimal total harmonic distortion. By using analog circuitry which gradually and selectively routes current to various LED groups, the conditioning circuits provide a high lighting efficiency by driving one, two, or more LED groups based on the instantaneous value of the driving voltage.

Furthermore, by using depletion MOSFET transistors with elevated drain- source resistances r_{ds}, the depletion MOSFET transistors transition between the saturation and cutoff modes relatively slowly. As such, by ensuring that the transistors gradually switch between conducting and non-conducting states, the switching on and off of the LED groups and transistors follows substantially sinusoidal contours. As a result, the circuitry produces little harmonic distortion as the LED groups are gradually activated and deactivated. In addition, the first and second (or more) LED groups control current through each other: the forward voltage level of the second LED group influences the current flow through the first LED group, and the forward voltage level of the first LED group influences the current flow through the second LED group. As a result, the circuitry is self-controlling through the interactions between the multiple LED groups and multiple MOSFET transistors.

In one aspect, the term "field effect transistor (FET)" may refer to any of a variety of multi-terminal transistors generally operating on the principals of controlling an electric field to control the shape and hence the conductivity of a channel of one type of charge carrier in a semiconductor material, including, but not limited to a metal oxide semiconductor field effect transistor (MOSFET), a junction FET (JFET), a metal semiconductor FET (MESFET), a high electron mobility transistor (HEMT), a modulation doped FET (MODFET), an insulated gate bipolar transistor (IGBT), a fast reverse epitaxial diode FET (FREDFET), and an ion-sensitive FET (ISFET).

Unless otherwise mentioned, various configurations described in the present disclosure may be implemented on a Silicon, Silicon-Germanium (SiGe), Gallium Arsenide (GaAs), Indium Phosphide (InP) or Indium Gallium Phosphide (InGaP) substrate, or any other suitable substrate.

A reference to an element in the singular is not intended to mean "one and only one" unless specifically so stated, but rather "one or more." For example, a resistor may refer to one or more resistors, a voltage may refer to one or more voltages, a current may refer to one or more currents, and a signal may refer to differential voltage signals.

The word "exemplary" is used herein to mean "serving as an example or illustration." Any aspect or design described herein as "exemplary" is not necessarily to be construed as preferred or advantageous over other aspects or designs. In one aspect, various alternative configurations and operations described herein may be considered to be at least equivalent.

## Claims

1. A circuit (100; 200; 400) comprising:
a first series interconnection of a first light-emitting diode group (109), a first transistor (113), and a first resistor (117); and
a second series interconnection of a second light-emitting diode group (111), a second transistor (115), and a second resistor (119), wherein:
the second series interconnection is connected between a drain terminal and a source terminal of the first transistor, and
the first and second light-emitting diode groups are selectively activated by a variable voltage applied across the first series interconnection; the circuit further comprising:
a rectifier (107) receiving an AC driving voltage at a pair of input terminals, rectifying the received AC driving voltage, and outputting the rectified voltage as the variable voltage at a pair of output nodes, and wherein:
a cathode of the first light-emitting diode group is coupled to the drain terminal of the first transistor (113), **characterised in that**;
an anode of the first light-emitting diode group (109) is coupled to one of the pair of output nodes of the rectifier;
the source terminal of the first transistor is coupled to a first terminal of the first resistor (117); and
a gate terminal of the first transistor is coupled to a second terminal of the first resistor and to the other of the pair of output nodes of the rectifier.

2. The circuit (100; 200; 400) according to claim 1, wherein:
an anode of the second light-emitting diode group (111) is coupled to the drain terminal of the first transistor (113);
a cathode of the second light-emitting diode group is coupled to a drain terminal of the second transistor (115);
a source terminal of the second transistor is coupled to a first terminal of the second resistor; and
a gate terminal of the second transistor is coupled to a second terminal of the second resistor and to the source terminal of the first transistor.

3. The circuit (400) according to claim 1, further comprising:
a third series interconnection of a third light-emitting diode group (112), a third transistor (116), and a third resistor (120), wherein:
the third series interconnection is connected between a drain terminal and a source terminal of the second transistor (115).

4. The circuit (100; 200; 400) according to claim 1, wherein the first (113) and second (115) transistors are depletion MOSFET transistors.

5. The circuit (100; 200; 400) according to claim 4, wherein:
the first resistor (117) is coupled between the source terminal and a gate terminal of the first transistor (113), and
the first transistor transitions from a conducting state to a non-conducting state when the variable voltage exceeds a first threshold.

6. The circuit (100; 200; 400) according to claim 5, wherein:
the second light-emitting diode group (111) is selectively activated when the variable voltage exceeds the first threshold.

7. The circuit (110; 200; 400) according to claim 5, wherein:
the first (109) and second (111) light-emitting diode groups have respective threshold voltages,
the first light-emitting diode group is activated when the variable voltage exceeds the threshold voltage of the first light-emitting diode group, and
the second light-emitting diode group is activated when the variable voltage exceeds the sum of the threshold voltages of the first and second light-emitting diode groups.

8. A circuit (500) comprising:
a first series interconnection of a first light-emitting diode group (509), a first transistor (513), and a first resistor (517); and
a second series interconnection of a second light-emitting diode group (511), a second transistor (515), and a second resistor (519), wherein:
the first and second light-emitting diode groups are selectively activated by a variable voltage applied across the first series interconnection; **characterised in that**:
the second series interconnection is connected between an anode of the first light-emitting diode group and a source terminal of the first transistor.

9. The circuit (500) according to claim 8, further comprising:
a rectifier (107) receiving an AC driving voltage at a pair of input terminals, rectifying the received AC driving voltage, and outputting the rectified voltage as the variable voltage at a pair of output nodes, and wherein:
the anode of the first light-emitting diode group (509) is coupled to one of the pair of output nodes of the rectifier;
a cathode of the first light-emitting diode group is coupled to a drain terminal of the first transistor;
the source terminal of the first transistor (513) is coupled to a first terminal of the first resistor (517); and
a gate terminal of the first transistor is coupled to a second terminal of the first resistor and to the other of the pair of output nodes of the rectifier.

10. The circuit (500) according to claim 9, wherein:
an anode of the second light-emitting diode group (511) is coupled to the anode of the first light-emitting diode group (509);
a cathode of the second light-emitting diode group is coupled to a drain terminal of the second transistor (515);
a source terminal of the second transistor is coupled to a first terminal of the second resistor (519); and
a gate terminal of the second transistor is coupled to a second terminal of the second resistor and to the source terminal of the first transistor (513).

11. The circuit (500) according to claim 9, further comprising:
a third series interconnection of a third light-emitting diode group, a third transistor, and a third resistor, wherein:
the third series interconnection is connected between the anode of the first light-emitting diode group (509) and a source terminal of the second transistor (515).

12. The circuit (500) according to claim 8, wherein the first (513) and second transistors (515) are depletion MOSFET transistors.

13. The circuit (500) according to claim 12, wherein:
the first resistor (517) is coupled between the source terminal and a gate terminal of the first transistor (513), and
the first transistor transitions from a conducting state to a non-conducting state when the variable voltage exceeds a first threshold.

14. The circuit (500) according to claim 13, wherein:
the second light-emitting diode group (511) is activated when the variable voltage exceeds the first threshold.

15. The circuit (500) according to claim 13, wherein:
the first (509) and second (511) light-emitting diode groups have respective threshold voltages,
the first light-emitting diode group is activated when the variable voltage exceeds the threshold voltage of the first light-emitting diode group and does not exceed the first threshold, and
the second light-emitting diode group is activated when the variable voltage exceeds the threshold voltage of the second light-emitting diode groups.

## Patentansprüche

1. Schaltkreis (100; 200; 400), umfassend:
eine erste Serienzwischenverbindung einer ersten Leuchtdiodengruppe (109), eines ersten Transistors (113) und eines ersten Widerstands (117); und
eine zweite Serienzwischenverbindung einer zweiten Leuchtdiodengruppe (111), eines zweiten Transistors (115) und eines zweiten Widerstands (119), wobei:
die zweite Serienzwischenverbindung zwischen einem Drain-Anschluss und einem Source-Anschluss des ersten Transistors verbunden ist, und
die ersten und zweiten Leuchtdiodengruppen selektiv durch eine variable Spannung aktiviert werden, die über die erste Serienzwischenverbindung angelegt wird; der Schaltkreis weiter umfassend:
einen Gleichrichter (107), der eine Wechselstromantriebsspannung bei einem Paar von Eingangsanschlüssen empfängt, die empfangene Wechselstromantriebsspannung gleichrichtet und die gleichgerichtete Spannung als die variable Spannung bei einem Paar von Ausgangsknoten ausgibt, und wobei:
eine Kathode der ersten Leuchtdiodengruppe mit dem Drain-Anschluss des ersten Transistors (113) gekoppelt ist, **dadurch gekennzeichnet, dass**:
eine Anode der ersten Leuchtdiodengruppe (109) mit einem des Paares von Ausgangsknoten des Gleichrichters gekoppelt ist;
der Source-Anschluss des ersten Transistors mit einem ersten Anschluss des ersten Wiederstands (117) gekoppelt ist; und
ein Gate-Anschluss des ersten Transistors mit einem zweiten Anschluss des ersten Widerstands und dem anderen des Paares von Ausgangsknoten des Gleichrichters gekoppelt ist.

2. Schaltkreis (100; 200; 400) nach Anspruch 1, wobei:
eine Anode der zweiten Leuchtdiodengruppe (111) mit dem Drain-Anschluss des ersten Transistors (113) gekoppelt ist;
eine Kathode der zweiten Leuchtdiodengruppe mit einem Drain-Anschluss des zweiten Transistors (115) gekoppelt ist;
ein Source-Anschluss des zweiten Transistors mit einem ersten Anschluss des zweiten Widerstands gekoppelt ist; und
ein Gate-Anschluss des zweiten Transistors mit einem zweiten Anschluss des zweiten Widerstands und dem Source-Anschluss des ersten Transistors gekoppelt ist.

3. Schaltkreis (400) nach Anspruch 1, weiter umfassend:
eine dritte Serienzwischenverbindung einer dritten Leuchtdiodengruppe (112), eines dritten Transistors (116) und eines dritten Widerstands (120), wobei:
die dritte Serienzwischenverbindung zwischen einem Drain-Anschluss und einem Source-Anschluss des zweiten Transistors (115) verbunden ist.

4. Schaltkreis (100; 200; 400) nach Anspruch 1, wobei die ersten (113) und zweiten (115) Transistoren Verarmungs-MOSFET-Transistoren sind.

5. Schaltkreis (100; 200; 400) nach Anspruch 4, wobei:
der erste Widerstand (117) zwischen dem Source-Anschluss und einem Gate-Anschluss des ersten Transistors (113) gekoppelt ist, und
der erste Transistor von einem leitenden Zustand zu einem nichtleitenden Zustand übergeht, wenn die variable Spannung eine erste Schwelle überschreitet.

6. Schaltkreis (100; 200; 400) nach Anspruch 5, wobei:
die zweite Leuchtdiodengruppe (111) selektiv aktiviert wird, wenn die variable Spannung die erste Schwelle überschreitet.

7. Schaltkreis (110; 200; 400) nach Anspruch 5, wobei:
die ersten (109) und zweiten (111) Leuchtdiodengruppen jeweilige Schwellenspannungen haben;
die erste Leuchtdiodengruppe aktiviert wird, wenn die variable Spannung die Schwellenspannung der ersten Leuchtdiodengruppe überschreitet, und
die zweite Leuchtdiodengruppe aktiviert wird, wenn die variable Spannung die Summe der Schwellenspannungen der ersten und zweiten Leuchtdiodengruppen überschreitet.

8. Schaltkreis (500), umfassend:
eine erste Serienzwischenverbindung einer ersten Leuchtdiodengruppe (509), eines ersten Transistors (513) und eines ersten Widerstands (517); und
eine zweite Serienzwischenverbindung einer zweiten Leuchtdiodengruppe (511), eines zweiten Transistors (515) und eines zweiten Widerstands (519), wobei:
die ersten und zweiten Leuchtdiodengruppen selektiv durch eine variable Spannung aktiviert werden, die über die erste Serienzwischenverbindung angelegt wird; **dadurch gekennzeichnet, dass**:
die zweite Serienzwischenverbindung zwischen einer Anode der ersten Leuchtdiodengruppe und einem Source-Anschluss des ersten Transistors verbunden ist.

9. Schaltkreis (500) nach Anspruch 8, weiter umfassend:
einen Gleichrichter (107), der eine Wechselstromantriebsspannung bei einem Paar von Eingangsanschlüssen empfängt, die empfangene Wechselstromantriebsspannung gleichrichtet und die gleichgerichtete Spannung als die variable Spannung bei einem Paar von Ausgangsknoten ausgibt, und wobei:
die Anode der ersten Leuchtdiodengruppe (509) mit einem Drain-Anschluss des ersten Transistors gekoppelt ist;
eine Kathode der ersten Leuchtdiodengruppe mit einem Drain-Anschluss des ersten Transistors gekoppelt ist;
der Source-Anschluss des ersten Transistors (513) mit einem ersten Anschluss des ersten Widerstands (517) gekoppelt ist; und
ein Gate-Anschluss des ersten Transistors mit einem zweiten Anschluss des ersten Widerstands und dem anderen des Paares von Ausgangsknoten des Gleichrichters gekoppelt ist.

10. Schaltkreis (500) nach Anspruch 9, wobei:
eine Anode der zweiten Leuchtdiodengruppe (511) mit der Anode der ersten Leuchtdiodengruppe (509) gekoppelt ist;
eine Kathode der zweiten Leuchtdiodengruppe mit einem Drain-Anschluss des zweiten Transistors (515) gekoppelt ist;
ein Source-Anschluss des zweiten Transistors mit einem ersten Anschluss des zweiten Widerstands (519) gekoppelt ist; und
ein Gate-Anschluss des zweiten Transistors mit einem zweiten Anschluss des zweiten Widerstands und dem Source-Anschluss des ersten Transistors (513) gekoppelt ist.

11. Schaltkreis (500) nach Anspruch 9, weiter umfassend:
eine dritte Serienzwischenverbindung einer dritten Leuchtdiodengruppe, eines dritten Transistors und eines dritten Widerstands, wobei:
die dritte Serienzwischenverbindung zwischen der Anode der ersten Leuchtdiodengruppe (509) und einem Source-Anschluss des zweiten Transistors (515) verbunden ist.

12. Schaltkreis (500) nach Anspruch 8, wobei die ersten (513) und zweiten Transistoren (515) Verarmungs-MOSFET-Transistoren sind.

13. Schaltkreis (500) nach Anspruch 12, wobei:
der erste Widerstand (517) zwischen dem Source-Anschluss und einem Gate-Anschluss des ersten Transistors (513) gekoppelt ist, und
der erste Transistor von einem leitenden Zustand zu einem nichtleitenden Zustand übergeht, wenn die variable Spannung eine erste Schwelle überschreitet.

14. Schaltkreis (500) nach Anspruch 13, wobei:
die zweite Leuchtdiodengruppe (511) aktiviert wird, wenn die variable Spannung die erste Schwelle überschreitet.

15. Schaltkreis (500) nach Anspruch 13, wobei:
die ersten (509) und zweiten (511) Leuchtdiodengruppen jeweilige Schwellenspannungen haben,
die erste Leuchtdiodengruppe aktiviert wird, wenn die variable Spannung die Schwellenspannung der ersten Leuchtdiodengruppe überschreitet und nicht die erste Schwelle überschreitet, und
die zweite Leuchtdiodengruppe aktiviert wird, wenn die variable Spannung die Schwellenspannung der zweiten Leuchtdiodengruppen überschreitet.

## Revendications

1. Circuit (100 ; 200 ; 400) comprenant :
une première interconnexion en série constituée d'un premier groupe de diodes électroluminescentes (109), d'un premier transistor (113), et d'une première résistance (117) ; et
une deuxième interconnexion en série constituée d'un deuxième groupe de diodes électroluminescentes (111), d'un deuxième transistor (115), et d'une deuxième résistance (119), dans lequel :
la deuxième interconnexion en série est connectée entre une borne de drain et une borne de source du premier transistor, et
les premier et deuxième groupes de diodes électroluminescentes sont activés sélectivement par une tension variable appliquée à travers la première interconnexion en série ; le circuit comprenant en outre :
un redresseur (107) recevant une tension de commande AC sur une paire de bornes d'entrée, redressant la tension de commande AC reçue, et délivrant en sortie la tension redressée en tant que tension variable sur une paire de noeuds de sortie, et dans lequel :
une cathode du premier groupe de diodes électroluminescentes est couplée à la borne de drain du premier transistor (113), **caractérisé en ce que** ;
une anode du premier groupe de diodes électroluminescentes (109) est couplée à l'un de la paire de noeuds de sortie du redresseur ;
la borne de source du premier transistor est couplée à une première borne de la première résistance (117) ; et
une borne de grille du premier transistor est couplée à une seconde borne de la première résistance et à l'autre de la paire de noeuds de sortie du redresseur.

2. Circuit (100 ; 200 ; 400) selon la revendication 1, dans lequel :
une anode du deuxième groupe de diodes électroluminescentes (111) est couplée à la borne de drain du premier transistor (113) ;
une cathode du deuxième groupe de diodes électroluminescentes est couplée à une borne de drain du deuxième transistor (115) ;
une borne de source du deuxième transistor est couplée à une première borne de la deuxième résistance ; et
une borne de grille du deuxième transistor est couplée à une seconde borne de la deuxième résistance et à la borne de source du premier transistor.

3. Circuit (400) selon la revendication 1, comprenant en outre :
une troisième interconnexion en série constituée d'un troisième groupe de diodes électroluminescentes (112), d'un troisième transistor (116), et d'une troisième résistance (120), dans lequel :
la troisième interconnexion en série est connectée entre une borne de drain et une borne de source du deuxième transistor (115).

4. Circuit (100 ; 200 ; 400) selon la revendication 1, dans lequel les premier (113) et deuxième (115) transistors sont des transistors MOSFET à appauvrissement.

5. Circuit (100 ; 200 ; 400) selon la revendication 4, dans lequel :
la première résistance (117) est couplée entre la borne de source et une borne de grille du premier transistor (113), et
le premier transistor passe d'un état conducteur à un état non conducteur lorsque la tension variable dépasse un premier seuil.

6. Circuit (100 ; 200 ; 400) selon la revendication 5, dans lequel :
le deuxième groupe de diodes électroluminescentes (111) est activé de manière sélective lorsque la tension variable dépasse le premier seuil.

7. Circuit (110 ; 200 ; 400) selon la revendication 5, dans lequel :
les premier (109) et deuxième (111) groupes de diodes électroluminescentes ont des tensions de seuil respectives,
le premier groupe de diodes électroluminescentes est activé lorsque la tension variable dépasse la tension de seuil du premier groupe de diodes électroluminescentes, et
le deuxième groupe de diodes électroluminescentes est activé lorsque la tension variable dépasse la somme des tensions de seuil des premier et deuxième groupes de diodes électroluminescentes.

8. Circuit (500) comprenant :
une première interconnexion en série constituée d'un premier groupe de diodes électroluminescentes (509), d'un premier transistor (513), et d'une première résistance (517) ; et
une deuxième interconnexion en série constituée d'un deuxième groupe de diodes électroluminescentes (511), d'un deuxième transistor (515), et d'une deuxième résistance (519), dans lequel :
les premier et deuxième groupes de diodes électroluminescentes sont activés sélectivement par une tension variable appliquée à travers la première interconnexion en série ; **caractérisé en ce que** :
la deuxième interconnexion en série est connectée entre une anode du premier groupe de diodes électroluminescentes et une borne de source du premier transistor.

9. Circuit (500) selon la revendication 8, comprenant en outre :
un redresseur (107) recevant une tension de commande AC sur une paire de bornes d'entrée, redressant la tension de commande AC reçue, et délivrant en sortie la tension redressée en tant que tension variable sur une paire de noeuds de sortie, et dans lequel :
l'anode du premier groupe de diodes électroluminescentes (509) est couplée à l'un de la paire de noeuds de sortie du redresseur ;
une cathode du premier groupe de diodes électroluminescentes est couplée à une borne de drain du premier transistor ;
la borne de source du premier transistor (513) est couplée à une première borne de la première résistance (517) ; et
une borne de grille du premier transistor est couplée à une seconde borne de la première résistance et à l'autre de la paire de noeuds de sortie du redresseur.

10. Circuit (500) selon la revendication 9, dans lequel :
une anode du deuxième groupe de diodes électroluminescentes (511) est couplée à l'anode du premier groupe de diodes électroluminescentes (509) ;
une cathode du deuxième groupe de diodes électroluminescentes est couplée à une borne de drain du deuxième transistor (515) ;
une borne de source du deuxième transistor est couplée à une première borne de la deuxième résistance (519) ; et
une borne de grille du deuxième transistor est couplée à une seconde borne de la deuxième résistance et à la borne de source du premier transistor (513).

11. Circuit (500) selon la revendication 9, comprenant en outre :
une troisième interconnexion en série constituée d'un troisième groupe de diodes électroluminescentes, d'un troisième transistor, et d'une troisième résistance, dans lequel :
la troisième interconnexion en série est connectée entre l'anode du premier groupe de diodes électroluminescentes (509) et une borne de source du deuxième transistor (515).

12. Circuit (500) selon la revendication 8, dans lequel les premier (513) et deuxième (515) transistors sont des transistors MOSFET à appauvrissement.

13. Circuit (500) selon la revendication 12, dans lequel :
la première résistance (517) est couplée entre la borne de source et une borne de grille du premier transistor (513), et
le premier transistor passe d'un état conducteur à un état non conducteur lorsque la tension variable dépasse un premier seuil.

14. Circuit (500) selon la revendication 13, dans lequel :
le deuxième groupe de diodes électroluminescentes (511) est activé lorsque la tension variable dépasse le premier seuil.

15. Circuit (500) selon la revendication 13, dans lequel :
les premier (509) et deuxième (511) groupes de diodes électroluminescentes ont des tensions de seuil respectives,
le premier groupe de diodes électroluminescentes est activé lorsque la tension variable dépasse la tension de seuil du premier groupe de diodes électroluminescentes et ne dépasse pas le premier seuil, et
le deuxième groupe de diodes électroluminescentes est activé lorsque la tension variable dépasse la tension de seuil des deuxièmes groupes de diodes électroluminescentes.
